# FASCICULE DE BREVET EUROPEEN

(11) **EP 2 547 559 B1**
(45) Date de publication et mention de la délivrance du brevet: **20.04.2016**
(21) Numéro de dépôt: 10810778.0
(22) Date de dépôt: 21.12.2010
(51) Int. Cl.: B60S 1/04

(54) **PALIER DE MECANISME D'ESSUIE-VITRE**
LAGER FÜR SCHEIBENWISCHERMECHANISMUS
WINDSHIELD WIPER MECHANISM BEARING

(30) Priorité: 16.03.2010 FR 1051858
(43) Date de publication de la demande: 23.01.2013
(73) Titulaire: Peugeot Citroën Automobiles SA, 78140 Vélizy Villacoublay (FR)
(72) Inventeur: GUIDEZ, Frédéric, F-59400 Cambrai (FR)
(86) Numéro de dépôt international: PCT/FR2010/052854
(87) Numéro de publication internationale: WO 2011/114011

(56) Documents cités:
- EP-A2- 0 947 401
- FR-A1- 2 142 099
- JP-A- 2004 017 894
- JP-A- 2006 290 300

## Description

L'invention se situe dans le domaine de l'essuyage des vitres de véhicules tels que des pare-brise. Plus particulièrement, l'invention concerne les mécanismes d'entrainement des bras-balais d'essuie-vitre.

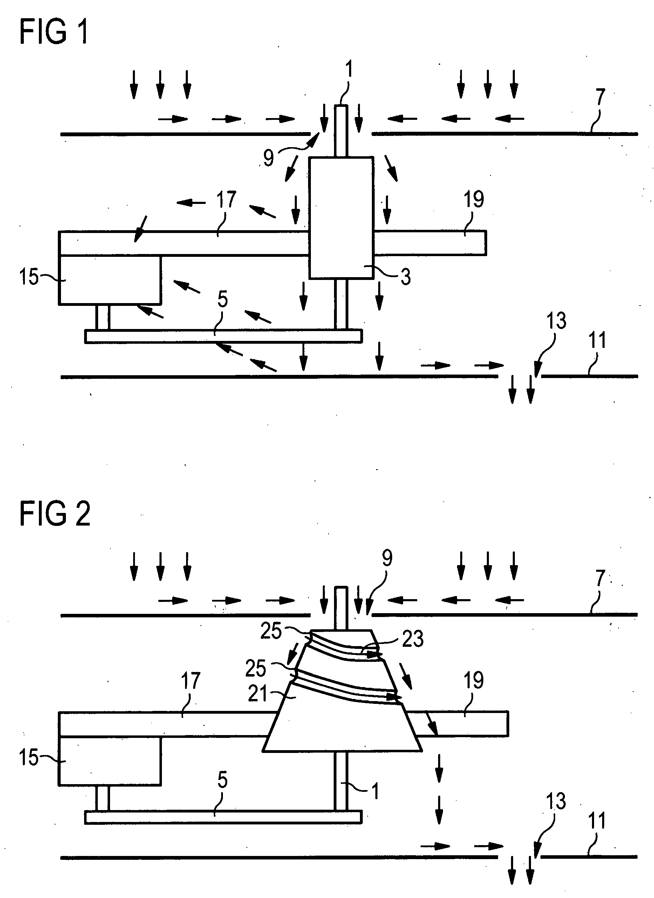

Les dispositifs actuels d'essuie-vitre tels qu'on peut les voir à la figure 1 comprennent typiquement un axe d'entraînement (1) qui est monté à rotation dans l'alésage d'un palier (3). Cet axe (1) est fixé par son extrémité inférieure à une manivelle (5) qui va lui transmettre un mouvement de rotation qui sera imprimé à l'autre extrémité de l'axe d'entraînement (1) à un entraîneur (non représenté) sur lequel est fixé le bras balai d'essuie vitre. Le palier comprend par ailleurs deux éléments radiaux permettant de le relier au bras fixe (17) du mécanisme d'une part et à un élément (19) de la structure du véhicule d'autre part. Le mécanisme permettant d'actionner l'essuie-vitre est généralement placé sous une grille d'auvent (7) percée d'ajours (9) par lesquels passent les axes d'entrainement (1).

Lorsqu'il pleut, une partie de l'eau de pluie (représentée sous forme de flèches) qui ruisselle sur le pare-brise traverse ces ajours (9) et peut endommager le dispositif. C'est le cas en particulier lorsque l'eau de pluie ruisselle sur le palier (3) avant de tomber dans le collecteur d'auvent (11) d'où elle est ensuite évacuée par une ouverture (13). En effet, lorsque l'eau de pluie ruisselle le long des paliers (3) elle éclabousse des composants environnants comme par exemple le moteur d'essuie-vitre (15) ou le filtre à pollen (non représenté). Bien que protégés au minimum, ces composants restent sensibles à l'aspersion à l'eau. Il a été observé que plus ces composants sont aspergés, plus ils présentent des défaillances.

Ce problème d'endommagement des composants situés sous la grille d'auvent (7) par le passage de l'eau de pluie au travers de ses ajours (9) a déjà été soulevé dans l'art antérieur.

Ainsi, le document JP 2000-71941 propose d'ajouter sur la partie haute de l'axe d'entraînement une structure protégeant de l'eau reliée de façon étanche à la partie haute du palier. Par ailleurs, cette structure présente sur sa partie haute un disque destiné à protéger le mécanisme des écoulements d'eau. Si ce système constitue une bonne protection du palier contre toute infiltration d'eau, il ne permet pas d'épargner les éléments placés aux environ de l'axe d'entraînement des éclaboussures. Bien au contraire, l'eau va tomber depuis le disque d'une hauteur plus importante et provoquera donc plus d'éclaboussures.

Plus pertinent, le document US 2004/0034959 propose de remédier à ce problème en montant sur l'axe d'entrainement un écran de protection destiné à recueillir l'eau de pluie et à l'évacuer. Malheureusement cette solution implique un surcoût puisqu'elle implique la fabrication et le pose d'une pièce supplémentaire.

JP-A-200401789 montre le préamble de la revendication 1.

L'invention s'attache à résoudre le problème d'endommagement des composants situés sous la grille d'auvent suite à leur aspersion par aspersion par l'eau de pluie qui soit plus simple et plus économique dans sa mise en oeuvre.

A cet effet l'invention concerne un palier de mécanisme d'essuie-vitre remarquable en ce qu'il comporte sur sa surface extérieure au moins un relief formant une gouttière destinée à recueillir l'eau qui ruissèle sur la surface dudit palier et à la diriger vers un emplacement défini sur ledit palier en vue de son évacuation et en ce que , la gouttière est une rainure formée dans l'épaisseur ou le volume dudit palier.

De préférence elle présente un casse-goutte au niveau de son extrémité opposée à l'extrémité destinée à l'évacuation de l'eau.

Dans un deuxième mode de réalisation non revendiqué, la gouttière est un relief sortant disposé en saillie par rapport à la surface extérieure dudit palier.

De manière optionnelle, la gouttière a une forme sensiblement circulaire s'étendant de façon circonférentielle autour du palier.

Eventuellement, la gouttière est double et s'étend de façon sensiblement symétrique de part et d'autre de l'élément radial du palier destiné à recevoir le bras fixe du mécanisme d'essuie-vitre.

De préférence, la gouttière est inclinée selon la hauteur du palier de telle sorte que la partie basse de la gouttière se trouve située sur le palier du côté opposé au côté où s'étend la manivelle associée au palier.

Dans une mise en oeuvre préférée de l'invention le palier comprend en outre un relief s'étendant verticalement par rapport à la hauteur du palier. Ce relief est situé sur le côté opposé au côté où s'étend la manivelle associée au palier, et est apte à coopérer avec la gouttière en vue de l'évacuation de l'eau.

Dans une autre mise en oeuvre préférée de l'invention, le palier présente une forme sensiblement conique orientée de telle sorte à ce que l'extrémité du palier associé à la manivelle soit la plus large.

De préférence, le palier présente au moins deux gouttières disposées successivement selon sa hauteur.

L'invention concerne également un véhicule automobile remarquable en ce qu'il comprend un palier tel que défini ci-dessus.

On aura compris à la lecture de cette définition que l'invention consiste à définir sur le palier une zone préférée pour l'évacuation de l'eau - cette zone étant définie comme celle où les risques de projection de d'eau sur les composants environnants sont les plus faibles - et à placer au moins une gouttière sur la surface du palier d'essuie-vitre afin de récolter et guider l'eau ruisselant sur son corps vers cette zone en vue de son évacuation.

L'invention sera bien comprise et d'autres aspects et avantages apparaitront clairement au vu de la description qui suit donnée à titre d'exemple en référence aux planches de dessins annexées sur lesquelles :
- La figure 1 est une représentation schématique d'un écoulement d'eau sur un palier selon l'art antérieur
- La figure 2 est une représentation schématique d'un écoulement d'eau sur un palier selon l'invention.

La figure 1, présentant l'art antérieur, a déjà été commentée dans la partie introductive. On se référera donc maintenant à la figure 2 présentant une vue analogue à celle de la figure 1 mais avec un corps de pallier (21) selon l'invention. A titre liminaire, il est précisé que l'invention s'applique à tous types de palier (21) qu'ils soient en métal ou en plastique comme par exemple en polyamide ou en polyoxyméthylène (POM).

Comme on peut le voir le palier (21) selon l'invention présente sur sa face extérieure au moins un relief formant une gouttière (23). Cette gouttière (23) a pour fonction de recueillir l'eau qui ruissèle sur la surface du palier (21) et de la diriger vers un emplacement défini sur le palier (21) en vue de son évacuation. La trajectoire suivie par l'eau de pluie est représentée sous forme de flèches.

Dans l'exemple de réalisation de la figure 2, la gouttière (23) est une rainure creusée dans l'épaisseur du palier (21). Une telle rainure a par exemple une profondeur minimale de 2 mm pour une largeur d'environ 4 mm. On rappelle que ces dimensions sont uniquement données à titre d'exemple et ne sauraient être limitatives. L'homme du métier adaptera les dimensions de la rainure en fonction du débit d'eau qui va ruisseler sur le palier (21) sans aucune difficulté majeure. Lorsque la profondeur de la gouttière (23) est amenée à être augmentée, l'homme du métier veillera à adapter l'épaisseur du palier (21) afin de ne pas trop altérer ses caractéristiques mécaniques.

La gouttière (23) peut également prendre la forme d'un relief sortant, disposé en saillie par rapport à la surface extérieure du palier (21). La gouttière (23) peut alors avoir la forme d'un petit canal ouvert semblable à la gouttière d'une maison ou toute autre forme, apte à recueillir et diriger l'eau vers un endroit donné, envisageable par l'homme du métier.

La gouttière (23), qu'elle soit rentrante ou sortante, peut être disposée de façon circonférentielle par rapport au palier (21) et prendre donc une forme sensiblement circulaire ou elliptique. Une autre possibilité est que cette gouttière se présente sous forme d'au moins un trait par exemple sensiblement hélicoïdal. Ou encore, en raison des contraintes liées à la présence sur le palier (21) d'une attache pour le bras fixe (17) et d'une attache (19) à la structure du véhicule, la gouttière (23) peut être double et être formée par deux traits sensiblement symétriques s'étendant par exemple de part et d'autre de l'élément radial du palier (21) destiné à recevoir le bras fixe (17) du mécanisme d'essuie-vitre.

Lorsque la gouttière (23) se présente sous forme de rainure, on aura avantage à associer cette rainure à un casse-goutte (25). On rappelle au besoin qu'un casse-goute est la forme particulière que va prendre l'extrémité supérieure de la rainure afin de modifier la trajectoire initiale de l'eau pour qu'elle entre dans la gouttière (23). Autrement dit, le casse-goutte (25) va débuter la gouttière (23) et se situe donc au niveau de son extrémité opposée à l'extrémité destinée à l'évacuation de l'eau. Lorsque la gouttière (23) est circulaire la partie supérieure de la rainure joue le rôle de casse-goutte (25).

De préférence, la gouttière (23) est inclinée selon la hauteur du palier (21) de telle sorte à diriger l'eau sous l'effet de la gravitation en direction de la zone choisie pour son évacuation. L'homme du métier aura avantage à diriger l'eau destinée à être évacuée de façon à qu'elle ne puisse pas se déverser sur l'embiellage du mécanisme d'essuie-vitre. Autrement dit, la partie basse de la gouttière (23) située sur le palier (21) du côté opposé au côté où s'étend la manivelle (5).

Afin de mieux diriger encore l'eau vers la zone d'évacuation choisie, il est possible de prévoir un relief (non représenté) s'étendant verticalement par rapport à la hauteur du palier (21) et destiné à coopérer avec la gouttière (23). Ce relief supplémentaire peut se présenter sous la forme d'une rainure verticale. Il est bien entendu que ce relief est disposé sur le palier (21) du côté de la zone d'évacuation choisie pour l'eau, c'est-à-dire du côté opposé à la manivelle (5). Le relief peut également et avantageusement se présenter sous forme de bec associé à la gouttière (23). Lorsqu'un tel relief est mis en oeuvre, la gouttière (23) peut être, au choix, inclinée ou horizontale par rapport au palier (21).

L'homme du métier peut également modifier la forme générale du palier (21) afin de lui donner une forme sensiblement conique ou pyramidale. Avantageusement, le palier (21) présente une forme sensiblement conique orientée de telle sorte à ce que l'extrémité du palier (21) associé à la manivelle (5) soit la plus large. La partie haute du palier (partie située du côté de l'entraîneur du bras balai d'essuie vitre) est alors la plus fine. De cette façon, le palier (21) peut agir en tant que collecteur d'eau de pluie. En effet, l'élargissement en direction de sa base permet au palier (21) présenter une surface plus importante apte à entrer en contact avec les gouttes de pluies et donc à les recueillir pour les diriger vers la zone d'évacuation désirée. La protection des composants environnants sensible à l'aspersion par l'eau en est alors d'autant augmentée.

Dans une telle configuration, l'homme du métier aura avantage à disposer au moins deux gouttières (23) successivement sur la hauteur du palier (21) afin de pouvoir évacuer l'eau supplémentaire ainsi recueillie. Néanmoins, on notera que la présence de plusieurs gouttières disposées successivement n'est pas limitée à l'emploi de palier (21) coniques. Cette configuration est par exemple utile pour aider à la gestion du débit de l'eau ruisselant sur la surface d'un palier (21) droit.

Comme on l'aura compris, l'invention est particulièrement avantageuse du fait qu'elle permet une gestion de l'eau de ruissèlement sans avoir à inclure de pièces supplémentaires dans le dispositif d'essuie-vitre. Le montage d'un dispositif selon l'invention ne requiert donc pas d'étapes supplémentaires. Par ailleurs, le palier (21) étant monté fixe sur la structure du véhicule, le positionnement de la zone d'évacuation de l'eau est toujours correct.

De plus, le palier (21) selon l'invention peut être moulé de sorte à présenter directement la gouttière (23). La production de paliers (21) selon l'invention n'implique donc pas nécessairement d'étapes supplémentaires.

L'invention ne se limite pas aux modes de réalisation décrits ci-avant, seulement à titre d'exemple mais englobe toutes les variantes que pourra envisager l'homme du métier dans le cadre de la définition qui en a été donnée.

## Revendications

1. Palier (21) de mécanisme d'essuie-vitre comportant sur sa surface extérieure au moins un relief formant une gouttière (23) destinée à recueillir l'eau qui ruissèle sur la surface dudit palier (21) et à la diriger vers un emplacement défini sur ledit palier (21) en vue de son évacuation **caractérisé en ce que** la gouttière (23) est une rainure formée dans l'épaisseur dudit palier (21).

2. Palier (21) selon la revendication 1 **caractérisé en ce que** la gouttière (23) présente un casse-goutte (25) au niveau de son extrémité opposée à l'extrémité destinée à l'évacuation de l'eau.

3. Palier (21) selon l'une des revendications 1 à 2 **caractérisé en ce que** la gouttière (23) a une forme sensiblement circulaire s'étendant de façon circonférentielle autour du palier (21).

4. Palier (21) selon l'une des revendications 1 à 2 **caractérisé en ce que** la gouttière (23) est double et s'étend de façon sensiblement symétrique de part et d'autre de l'élément radial du palier (21) destiné à recevoir le bras fixe (17) du mécanisme d'essuie-vitre.

5. Palier (21) selon l'une des revendications 1 à 4 **caractérisé en ce que** la gouttière (23) est inclinée selon la hauteur du palier (21) de telle sorte que la partie basse de la gouttière se trouve située sur le palier (21) du côté opposé au côté où s'étend la manivelle (5) associée audit palier (21).

6. Palier (21) selon l'une des revendications 1 à 5 **caractérisé en ce qu'**il comprend en outre un relief s'étendant verticalement par rapport à la hauteur du palier (21), situé sur le côté opposé au côté où s'étend la manivelle (5), et apte à coopérer avec la gouttière (23) en vue de l'évacuation de l'eau.

7. Palier (21) selon l'une des revendications 1 à 6 **caractérisé en ce qu'**il présente une forme sensiblement conique orientée de telle sorte à ce que l'extrémité du palier (21) associé à la manivelle (5) soit la plus large.

8. Palier (21) selon l'une des revendications 1 à 7 **caractérisé en ce qu'**il présente au moins deux gouttières (23) disposées successivement selon sa hauteur.

9. Véhicule **caractérisé en ce qu'**il comprend un palier (21) selon l'une des revendications précédentes.

## Patentansprüche

1. Lager (21) für Scheibenwischermechanismus, umfassend auf seiner Außenfläche mindestens ein Relief, das eine Rinne (23) bildet, die bestimmt ist, das über die Oberfläche des Lagers (21) rinnende Wasser zu sammeln und es zwecks seiner Ableitung zu einer bestimmten Stelle auf dem Lager (21) zu leiten, **dadurch gekennzeichnet, dass** die Rinne (23) eine in die Dicke des Lagers (21) eingearbeitete Rille ist.

2. Lager (21) nach Anspruch 1, **dadurch gekennzeichnet, dass** die Rinne (23) im Bereich ihres Endes gegenüber dem zur Ableitung des Wassers bestimmten Endes ein Tropfkantenprofil (25) aufweist.

3. Lager (21) nach einem der Ansprüche 1 bis 2, **dadurch gekennzeichnet, dass** die Rinne (23) eine etwa kreisrunde Form hat, die sich zirkumferentiell um das Lager (21) erstreckt.

4. Lager (21) nach einem der Ansprüche 1 bis 2, **dadurch gekennzeichnet, dass** die Rinne (23) doppelt ist und sich etwa symmetrisch beiderseits des radialen Elements des Lagers (21) erstreckt, das zur Aufnahme des festen Arms (17) des Scheibenwischermechanismus bestimmt ist.

5. Lager (21) nach einem der Ansprüche 1 bis 4, **dadurch gekennzeichnet, dass** die Rinne (23) gemäß der Höhe des Lagers (21) derart geneigt ist, dass der untere Teil der Rinne auf dem Lager (21) auf der Seite liegt, die der Seite gegenüberliegt, wo sich die dem Lager (21) zugeordnete Kurbel (5) befindet.

6. Lager (21) nach einem der Ansprüche 1 bis 5, **dadurch gekennzeichnet, dass** es ferner ein Relief umfasst, das sich in Bezug zur Höhe des Lagers (21) vertikal erstreckt, auf der Seite liegt, die der Seite gegenüberliegt, wo sich die Kurbel (5) befindet und imstande ist, mit der Rinne (23) zwecks Ableitung des Wassers zusammenzuwirken.

7. Lager (21) nach einem der Ansprüche 1 bis 6, **dadurch gekennzeichnet, dass** es eine etwa konische Form aufweist, die derart ausgerichtet ist, dass das der Kurbel (5) zugeordnete Ende des Lagers (21) das breiteste ist.

8. Lager (21) nach einem der Ansprüche 1 bis 7, **dadurch gekennzeichnet, dass** es mindestens zwei Rinnen (23) aufweist, die gemäß seiner Höhe aufeinanderfolgend angeordnet sind.

9. Fahrzeug, **dadurch gekennzeichnet, dass** es ein Lager (21) nach einem der vorangehenden Ansprüche umfasst.

## Claims

1. Windshield wiper mechanism bearing (21), the outer surface thereof comprising at least one raised part forming a channel (23) intended to collect the water that runs onto the surface of said bearing (21) and direct it towards a point defined on said bearing (21) for its discharge, **characterised in that** the channel (23) is a groove made in the thickness of said bearing (21).

2. Bearing (21) according to claim 1, **characterised in that** the channel (23) has a drop-breaker (25) at the level of its end opposite the end intended to discharge the water.

3. Bearing (21) according to one of claims 1 to 2, **characterised in that** the channel (23) has a substantially circular shape extending in a circumferential manner about the bearing (21).

4. Bearing (21) according to one of claims 1 to 2, **characterised in that** the channel (23) is a double channel and extends in a substantially symmetrical manner on either side of the radial element of the bearing (21) intended to receive the fixed arm (17) of the windshield wiper mechanism.

5. Bearing (21) according to one of claims 1 to 4, **characterised in that** the channel (23) is inclined according to the height of the bearing (21) such that the lower portion of the channel is located on the bearing (21) on the side opposite the side on which extends the crank arm (5) associated with said bearing (21).

6. Bearing (21) according to one of claims 1 to 5, **characterised in that** it further comprises a raised part extending vertically in relation to the height of the bearing (21), located on the side opposite the side on which extends the crank arm (5), and capable of engaging with the channel (23) with the purpose of discharging water.

7. Bearing (21) according to one of claims 1 to 6, **characterised in that** it has a substantially tapered shape, directed such that the end of the bearing (21) associated with the crank arm (5) is as wide as possible.

8. Bearing (21) according to one of claims 1 to 7, **characterised in that** it has at least two channels (23) successively positioned according to its height.

9. Vehicle **characterised in that** it comprises a bearing (21) according to one of the previous claims.
